# EUROPEAN PATENT APPLICATION

(11) **EP 2 521 314 A1**
(43) Date of publication of application: **07.11.2012**
(21) Application number: 12166063.3
(22) Date of filing: 27.04.2012
(51) Int. Cl.: H04L 12/24

(54) **Mesh data network data management system, node, and computer program product**

(30) Priority: 03.05.2011 US 201113099627
(71) Applicant: General Electric Company, Schenectady, NY 12345 (US)
(72) Inventor: Mayo, Thomas Clayton, Rochester, NY New York 14620 (US)
(74) Representative: Cleary, Fidelma

(57) **Abstract**

A mesh data network data management system where each of a plurality of nodes (300) collects data when a respective triggering event (324) occurs, puts the collected data (314) in a reporting data packet (310), and sends the reporting data packet (310) to an upstream node (300) in the mesh data network. If a reporting node (300) is in communication with a downstream node (300), it may also place received downstream data (334) in the reporting data packet (310) so that all data from a branch of the mesh data network in which the reporting node (300) operates may be included in the reporting data packet (310).

## Description

### BACKGROUND OF THE INVENTION

The disclosure relates generally to data networks and to so-called "smart grid" hardware, software, and equipment for electricity distribution, and more particularly, to a mesh data network implementation and method.

Mesh data networks employ a topology in which nodes farther from a network origination point, such as a router or a collection point report to nodes closer to the router or the collection point. One level of nodes reports directly to the network origination point, and nodes farther away or downstream report to the network origination point via closer or upstream nodes. Such a topology reduces a distance over which a particular node must communicate to report to or receive information from the network origination point. The reduction in distance reduces power requirements in networks employing electromagnetic radiation, such as radio frequency or microwave radiation, as a communications medium. In addition, signals are less likely to become corrupted by interference and the like since they travel over a shorter distance.

Mesh data networks are often employed in power distribution networks, particularly in so-called "smart grid" power distribution networks. Typically, power distribution networks include master stations, transmission lines/networks, substations, distribution lines/networks, and customers. Substations in high and medium voltage distribution networks can include primary devices, such as electrical cables, lines, bus bars, switches, power transformers, and instrument transformers, which are typically arranged in switch yards and/or bays. The primary devices may be automated using a substation automation (SA) system that can use microprocessor-based, programmable secondary devices generally referred to as intelligent electronic devices (IEDs). IEDs protect, control, and monitor the primary devices. SA systems generally include a communications arrangement, such as an Ethernet network, to allow communication between devices and/or between the substation and external devices, such as control centers, remote operators, and/or other substations.

A mesh data network could be employed at many levels within such a power distribution network. For example, a substation could employ a mesh data network to receive data from IEDs, sensors, and/or other devices within the substation. Further, the substation itself could be a node in a higher-level mesh data network including substations and other components of the power distribution network as nodes. As the number of nodes in a mesh data network increases, however, data collection and reporting can create excessive data traffic, resulting in packet collisions and possible data loss.

An example of an implementation of a mesh data network in a power distribution network is automated power usage reporting. In such an implementation, utility power meters installed at end-user locations by a utility company may be commanded via radio frequency to report a reading so that the utility company may bill the end-users for the power they have used. The command is typically issued by a central data collection device and may be relayed by devices between the collection device and the power meters. The relaying devices may be other power meters in some applications, and all are nodes in the mesh data network. However, because current radio transceiver technology can not transmit and receive simultaneously, a time must be prearranged during which nodes stop transmission to "listen" for commands and/or other signals from other nodes in the mesh data network.

### BRIEF DESCRIPTION OF THE INVENTION

The present invention resides in a method for data management in a mesh data network, the mesh data network including at least one node the method comprising monitoring for a predefined triggering event, and collecting reporting data in response to a first predefined triggering event, the node becoming a reporting node. The method also includes configuring the node to place the reporting data and any downstream data received by the reporting node in a reporting payload portion of a reporting data packet and sending the reporting data packet to another node upstream of the reporting node.

The invention further resides in computer program comprising computer program code means arranged to perform the above method when run a computer and in the computer program embodied on a computer-readable medium.

The invention further resides in a node of mesh data network, the node having a computer system including the computer program as described above.

Other aspects of the invention provide methods, systems, program products, and methods of using and generating each, which include and/or implement some or all of the actions described herein. The illustrative aspects of the invention are designed to solve one or more of the problems herein described and/or one or more other problems not discussed.

### BRIEF DESCRIPTION OF THE DRAWING

Embodiments of the present invention will now be described, by way of example only, with reference to the accompanying drawings in which:
FIG. 1 shows a schematic diagram of a power distribution network in which embodiments of the invention may be employed.
FIG. 2 shows a schematic diagram of a mesh data network in which embodiments of the invention may be employed.
FIG. 3 shows a schematic diagram of generation of a data packet according to embodiments of the invention.
FIG. 4 shows a schematic flow diagram of a method according to embodiments of the invention.
FIG. 5 shows a schematic diagram of an environment including a computer system in which embodiments of the invention may be employed.

It is noted that the drawings may not be to scale. The drawings are intended to depict only typical aspects of the invention, and therefore should not be considered as limiting the scope of the invention. In the drawings, like numbering represents like elements between the drawings.

The detailed description explains embodiments of the invention, together with advantages and features, by way of example with reference to the drawings.

### DETAILED DESCRIPTION OF THE INVENTION

As indicated above, aspects of the invention provide a system, method, and computer storage product for mesh data network usage. As used herein, unless otherwise noted, the term "set" means one or more (i.e., at least one) and the phrase "any solution" means any now known or later developed solution. Similarly, where elements are described and/or recited in the singular, it should be recognized that multiple of such elements are included unless otherwise noted. Thus, "a" generally means "at least one" throughout the instant application, including the claims.

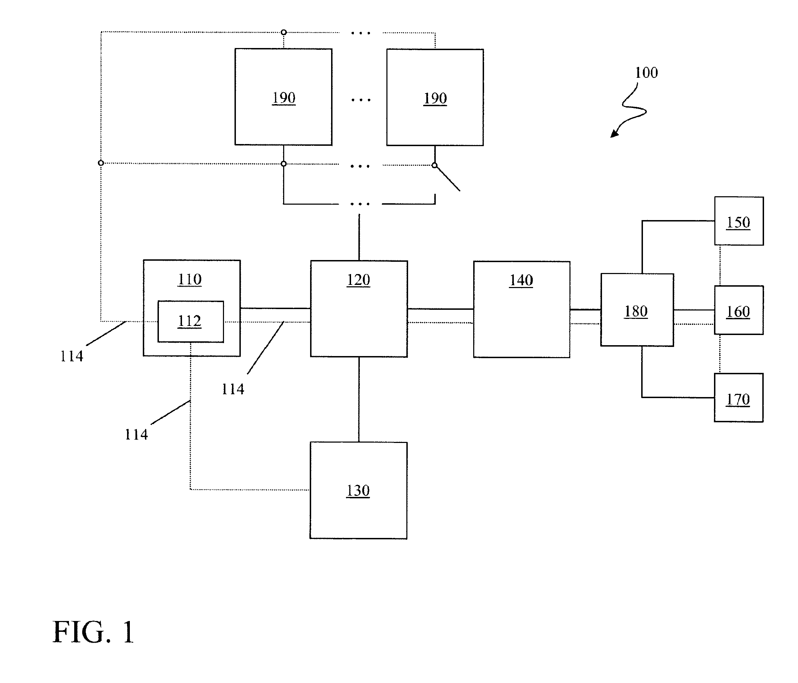

With reference to the accompanying drawings, FIG. 1 shows a schematic diagram of a power generation and distribution network 100 in which a master station 110 may be connected to a transmission network 120, which may include high tension power lines. Transmission customers 130 may be connected to transmission network 120, and at least one substation 140 takes power from transmission lines 120 and sends it to sub-transmission customers 150, primary customers 160, and/or secondary customers 170 via distribution lines 180. One or more power sources 190 may be connected to the network 100 by master stations 110 to provide power that is distributed by network 100 as needed.

A master station 110 in embodiments includes at least one computing device 112 arranged to control power distribution network components, including to connect and/or disconnect power sources 190 to/from transmission network 120. In addition, computing device 112 in embodiments may start and/or shut down power sources 190, such as coal/gas-fired power generation stations, solar power generation stations, hydroelectric power generation stations, fuel-cell power storage facilities, and other power sources as may be appropriate and/or desired, to more closely match power supply to power demand on power distribution network 100. Computing device 112 may employ one or more communications arrangements 114 to communicate with components of power distribution network 100 and/or with power sources 190. For example, such as Ethernet-based communications may be employed in a communications arrangement 114.

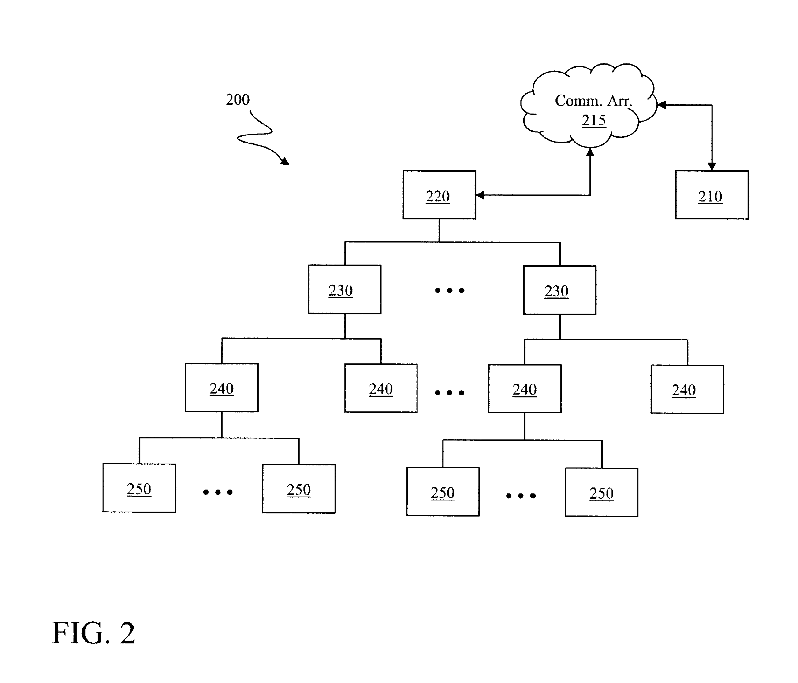

FIG. 2 schematically illustrates a mesh data network 200 in which embodiments of the invention may be employed. A power distribution network such as that shown in FIG. 1 may include or be considered to be a mesh data network inasmuch as the various devices of the power distribution network 100 with which computing device(s) 112 communicate, including computing device(s) 112, may be considered to be nodes. As seen in FIG. 2, a mesh data network 200 includes a network origination point 210 and a first parent node 220 in communication with network origination point 210 via a communications arrangement 215, such as a computer network, radio frequency or other electromagnetic-radiation-based communications, the Internet, or other suitable communications system(s). A network origination point 210 can be a router, switch, hub, or other suitable network device, and may be considered to be a parent node in embodiments. First parent node 220 may link at least one first child node 230 with network origination point 210, such as by acting as a collection point and/or by relaying messages between first child node 230 and network origination point 210. First child node 230 may be referred to as "downstream" of first parent node 220 since it is farther from network origination point 210 in the topology of mesh data network 200, and first parent node 220 may be referred to as being "upstream" of first child node 230 since it is closer to network origination point 210. Mesh data network 200 may include a plurality of first child nodes 230, and each first child node 230 may act as a parent node to one or more second child nodes 240, each of which may also act as a parent node to third child nodes 250, and so forth, for as many layers and/or branches as is appropriate and/or necessary to achieve a user's goal. A parent node may act as a collection point for downstream nodes connected to the parent node directly or via intermediate nodes. Thus, in embodiments, each node 220-250 of a mesh data network may act as a parent node, a child node, and/or a collection point. A node farthest from network origination point 210 in a portion of mesh data network 200 and/or without at least one child node may be referred to as a leaf node and/or a terminal node.

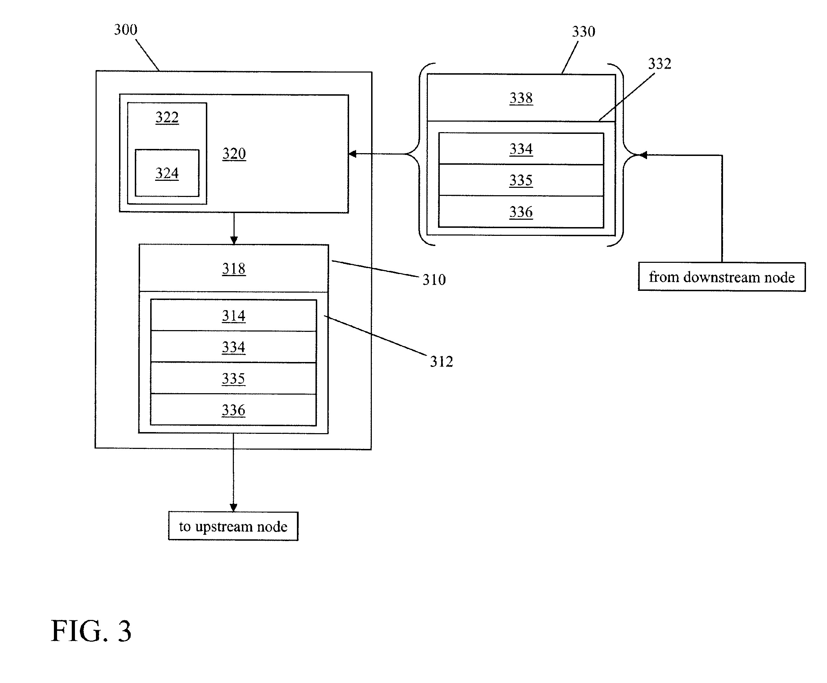

A node 300 of mesh data network 200 is shown schematically in FIG. 3 as a parent node and as a child node, and may represent any node of mesh data network 200, as will be explained. Each node 300 of mesh data network 200, whether a leaf node, a child node, and/or a parent node, may collect data 314 about itself and generate or create a reporting data packet 310. For example, where mesh data network 200 includes automated power meters as nodes, node 300 may collect power usage data as at least part of data 314, though other data might be collected and reported by an automated power meter. Additional types of data 314 that might be collected include fault reports, configuration information, environmental information, and/or other types of information as may be desired and/or appropriate for the particular node(s) of a particular mesh data network.

Reporting data packet 310 includes at least a reporting payload portion 312 in which the node may place reporting data 314 for transfer to a parent/upstream node, which may include network origination point 210. In embodiments, a medium access controller (MAC) 320 may be employed to generate reporting data packet 310 with a reporting payload portion 312 and a reporting overhead portion 318, reporting overhead portion 318 including addressing and/or other information about reporting data packet 310, its source, its destination, and/or other appropriate criteria. While MAC is identified as a type of controller and/or protocol employed in this example, other controllers and/or protocols may be used as desired and/or as appropriate within the scope of embodiments.

Where node 300 acts as a parent node, node 300 may receive a downstream data packet 330 including a respective downstream payload portion 332 in which downstream data 334 may be placed. In embodiments, particularly where a MAC is used in each node, downstream packet 330 may include a downstream overhead portion 338 including information analogous to that of reporting overhead portion 318. Downstream data packet 330 may carry additional node data 335, 336 for each further downstream node in a branch of the mesh data network 200 from which downstream data packet 330 is sent, all the way to a leaf node of the respective branch from which downstream packet 330 arrives. In embodiments, MAC 320 combines data from downstream payload portion 332 with reporting data 314 and places the combined data in reporting payload portion 312 of reporting data packet 310. Thus, reporting payload portion 312 includes reporting data 314 and data from downstream nodes in received payload portion 332, which is all sent upstream in reporting data packet 310. Downstream data 334 and reporting data 314 may be combined in any suitable manner that allows an upstream node and/or collection point to extract the data for use. For example, the data may be concatenated, reporting data 314 may be appended to received data 334, received data 334 may be appended to reporting data 314, and/or current and received data 314, 334 may be combined using an encoding and/or compression scheme.

A predefined triggering event may determine when a node collects and/or sends its data upstream. For example, with reference to FIG. 3, MAC 320 of node 300 may include a memory or other storage device 322 in which triggering event code and/or data 324 may be stored. Alternatively, triggering event code and/or data 324 may be stored externally of MAC 320, and another device may handle triggering events rather than using MAC 320 for such purpose. A triggering event may include a predefmed period having elapsed, a predefined number of downstream data packets having been received from respective downstream nodes, or other events as may be desired and/or appropriate within the scope of embodiments. For example, change in environmental condition, network topology, power demand, and/or another suitable event, criterion, and/or variable could be used as a triggering event. Additionally, predefined triggering events in a node may be prioritized so that if one event has occurred, a node waits to collect and/or send data upstream until another event has also occurred, for example. Prioritization could also or alternatively require that a node collect and/or send data upstream when one event has occurred regardless of whether or not an additional triggering event has occurred. For example, a parent node may be configured to collect and/or send data upstream when data has been received from all downstream child nodes regardless of whether a predefmed period of time had elapsed, and/or could be configured to collect and/or send data when a predefined period has elapsed regardless of how many child nodes have sent data, in embodiments.

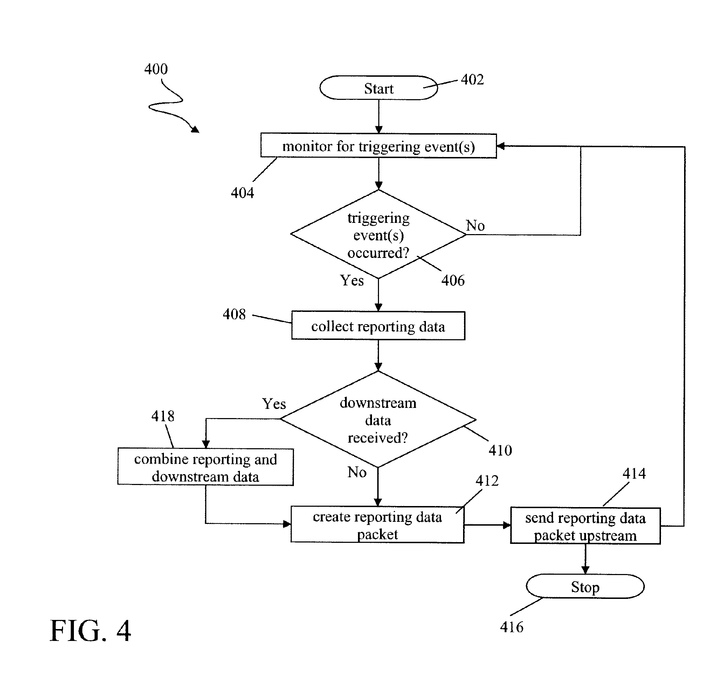

With reference to FIG. 4, processes in a method 400 according to embodiments of the invention are schematically illustrated. The method starts with block 402 and a node monitors for a triggering event (block 404), such as a predefined period having elapsed and/or a predefmed quantity of downstream data having been received. A check is made to see if a triggering event has occurred (block 406). If no triggering event has occurred, monitoring continues (return to block 404). If a triggering event has occurred, then reporting data is collected (408), and a check is performed to see if downstream data has been received (block 410). If no downstream data has been received, a reporting data packet including the reporting data is generated or created (block 412) and sent upstream (block 414), at which point the method may return to monitoring (block 404) or stop (block 416). If in block 410 it is determined that downstream data has been received, current and downstream data are combined (block 418) and used to create the reporting data packet (block 412) as described above and sent upstream (block 414). The flow diagram depicted herein is just one example, and many variations to this diagram or the steps (or operations) described therein may be made without departing from the spirit of the invention. For instance, the steps may be performed in a differing order or steps may be added, deleted or modified. All of these variations are considered a part of the claimed invention.

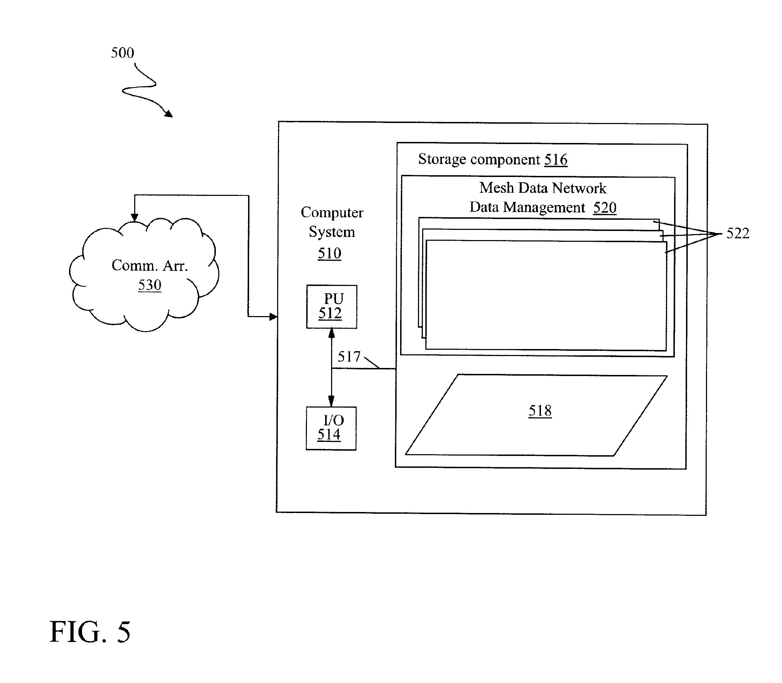

Turning to FIG. 5, an illustrative environment 500 for a mesh data network data management computer program product is schematically illustrated according to an embodiment of the invention. To this extent, environment 500 includes a computer system 510, such as a MAC or other computing device that may be part of a node of mesh data network 200, that may perform a process described herein in order to execute a mesh data network data management method according to embodiments. In particular, computer system 510 is shown including a mesh data network data management program 520, which makes computer system 510 operable to manage data in a mesh data network by performing a process described herein, such as an embodiment of the mesh data network data management method discussed above.

Computer system 510 is shown including a processing component or unit (PU) 512 (e.g., one or more processors), an input/output (I/O) component 514 (e.g., one or more I/O interfaces and/or devices), a storage component 516 (e.g., a storage hierarchy), and a communications pathway 517. In general, processing component 512 executes program code, such as mesh data network data management program 520, which is at least partially fixed in storage component 516, which may include one or more computer readable storage medium or device. While executing program code, processing component 512 may process data, which may result in reading and/or writing transformed data from/to storage component 516 and/or I/O component 514 for further processing. Pathway 517 provides a communications link between each of the components in computer system 510. I/O component 514 may comprise one or more human I/O devices, which enable a human user to interact with computer system 510 and/or one or more communications devices to enable a system user to communicate with computer system 510 using any type of communications link. In embodiments, a communications arrangement 530, such as networking hardware/software, enables computing device 510 to communicate with other devices in and outside of a node in which it is installed. To this extent, mesh data network data management program 520 may manage a set of interfaces (e.g., graphical user interface(s), application program interface, and/or the like) that enable human and/or system users to interact with mesh data network data management program 520. Further, mesh data network data management program 520 may manage (e.g., store, retrieve, create, manipulate, organize, present, etc.) data, such as mesh data network data management data 518, using any solution.

Computer system 510 may comprise one or more general purpose computing articles of manufacture (e.g., computing devices) capable of executing program code, such as mesh data network data management program 520, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. Additionally, computer code may include object code, source code, and/or executable code, and may form part of a computer program product when on at least one computer readable medium. It is understood that the term "computer readable medium" may comprise one or more of any type of tangible medium of expression, now known or later developed, from which a copy of the program code may be perceived, reproduced, or otherwise communicated by a computing device. For example, the computer readable medium may comprise: one or more portable storage articles of manufacture; one or more memory/storage components of a computing device; paper; and/or the like. Examples of memory/storage components include magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other computer readable storage medium now known and/or later developed and/or discovered on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments. A technical effect of the executable instructions is to implement a mesh data network data management method and/or system and/or computer program product that, in a node, collects node data when a triggering event occurs, places the collected data and any received downstream data from any downstream or child node in a payload portion of a reporting data packet, and sends the reporting data packet upstream to an upstream node. A triggering event may include an elapsed predefined period, a predefmed amount of downstream data received, and/or other criteria as may be desired and/or appropriate.

The computer program code may be written in computer instructions executable by the controller, such as in the form of software encoded in any programming language. Examples of suitable computer instruction and/or programming languages include, but are not limited to, assembly language, Verilog, Verilog HDL (Verilog Hardware Description Language), Very High Speed IC Hardware Description Language (VHSIC HDL or VHDL), FORTRAN (Formula Translation), C, C++, C#, Java, ALGOL (Algorithmic Language), BASIC (Beginner All-Purpose Symbolic Instruction Code), APL (A Programming Language), ActiveX, Python, Perl, php, Tcl (Tool Command Language), HTML (HyperText Markup Language), XML (eXtensible Markup Language), and any combination or derivative of one or more of these and/or others now known and/or later developed and/or discovered. To this extent, mesh data network data management program 520 may be embodied as any combination of system software and/or application software.

Further, mesh data network data management program 520 may be implemented using a set of modules 522. In this case, a module 522 may enable computer system 510 to perform a set of tasks used by mesh data network data management program 520, and may be separately developed and/or implemented apart from other portions of mesh data network data management program 520. As used herein, the term "component" means any configuration of hardware, with or without software, which implements the functionality described in conjunction therewith using any solution, while the term "module" means program code that enables a computer system 510 to implement the actions described in conjunction therewith using any solution. When fixed in a storage component 516 of a computer system 510 that includes a processing component 512, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computer system 510.

When computer system 510 comprises multiple computing devices, each computing device may have only a portion of mesh data network data management program 520 fixed thereon (e.g., one or more modules 522). However, it is understood that computer system 510 and mesh data network data management program 520 are only representative of various possible equivalent computer systems that may perform a process described herein. To this extent, in other embodiments, the functionality provided by computer system 510 and mesh data network data management program 520 may be at least partially implemented by one or more computing devices that include any combination of general and/or specific purpose hardware with or without program code. In each embodiment, the hardware and program code, if included, may be created using standard engineering and programming techniques, respectively.

Regardless, when computer system 510 includes multiple computing devices, the computing devices may communicate over any type of communications link. Further, while performing a process described herein, computer system 510 may communicate with one or more other computer systems using any type of communications link. In either case, the communications link may comprise any combination of various types of wired and/or wireless links; comprise any combination of one or more types of networks; and/or utilize any combination of various types of transmission techniques and protocols now known and/or later developed and/or discovered.

As discussed herein, mesh data network data management program 520 enables computer system 510 to implement a mesh data network data management product and/or method, such as that shown schematically in FIG. 4. Computer system 510 may obtain mesh data network data management data 518 using any solution. For example, computer system 510 may generate and/or be used to generate mesh data network data management data 518, retrieve mesh data network data management data 518 from one or more data stores, receive mesh data network data management data 518 from another system or device in or outside of the node, and/or the like.

In another embodiment, the invention provides a method of providing a copy of program code, such as mesh data network data management program 520 (FIG. 5), which implements some or all of a process described herein, such as that shown schematically in and described with reference to FIG. 4. In this case, a computer system may process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer readable medium. In either case, the set of data signals may be transmitted/received using any type of communications link.

In still another embodiment, the invention provides a method of generating a system for implementing a mesh data network data management product and/or method. In this case, a computer system, such as computer system 510 (FIG. 5), can be obtained (e.g., created, maintained, made available, etc.), and one or more components for performing a process described herein can be obtained (e.g., created, purchased, used, modified, etc.) and deployed to the computer system. To this extent, the deployment may comprise one or more of: (1) installing program code on a computing device; (2) adding one or more computing and/or I/O devices to the computer system; (3) incorporating and/or modifying the computer system to enable it to perform a process described herein; and/or the like.

It is understood that aspects of the invention can be implemented as part of a business method that performs a process described herein on a subscription, advertising, and/or fee basis. That is, a service provider could offer to implement a mesh data network data management product and/or method as described herein. In this case, the service provider can manage (e.g., create, maintain, support, etc.) a computer system, such as computer system 510 (FIG. 5), that performs a process described herein for one or more customers. In return, the service provider can receive payment from the customer(s) under a subscription and/or fee agreement, receive payment from the sale of advertising to one or more third parties, and/or the like.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method (520) for data management in a mesh data network (200), the mesh data network (200) including at least one node (300), the method comprising:
monitoring for a predefined triggering event (324);
collecting reporting data (314) in response to a first predefined triggering event (324), the node (300) becoming a reporting node (300);
determining whether downstream data (334) has been received from a downstream node (300);
combining downstream data (334) with the reporting data (314) responsive to downstream data (334) having been received;
placing at least the reporting data (314) in a reporting payload portion (312) of a reporting data packet (310); and
sending the reporting data packet (310) to another node (300) upstream of the reporting node (300).

2. The method of claim 1, wherein the first predefined triggering event (324) includes receiving of a downstream data packet (330) from each downstream node (300) connected to the reporting node (300).

3. The method of claim 1 or 2, wherein a second predefmed triggering event (324) includes a first predefined period having elapsed, and one of the first and second triggering event (324) supersedes the other of the first and second triggering event (324).

4. The method of any of claims 1 to 3, wherein a downstream payload portion (332) of a downstream data packet (330) carries the downstream data (334), the method further comprising placing the combined reporting data (314) and downstream data (334) in the reporting payload portion (312).

5. The method of any of claims 1 to 4, further comprising combining the reporting data (314) and the downstream data (334) by concatenation.

6. The method of claim 5, wherein the concatenation includes appending the reporting data (314) to the downstream data (334).

7. The method of claim 5, wherein the concatenation includes appending the downstream data (334) to the reporting data (314).

8. The method of any preceding claim, wherein the first predefined triggering event (324) is a first predefined period having elapsed.

9. The method of any preceding claim, further comprising generating the reporting data packet (310) by a medium access controller (MAC).

10. The method of any preceding claim, wherein the reporting node (300) acts as a parent node (300) when a downstream node (300) is connected thereto.

11. A computer program comprising computer program code means arranged to perform the steps of the method of claims 1 to 10.

12. The computer program of claim 11, embodied on a computer-readable medium.

13. In a mesh data network, a node of the mesh data network comprising a computer system comprising the computer program of claim 12.
